Europäisches Patentamt

European Patent Office

Office européen des brevets

(11) Publication number: **0 061 544**

**A1**

## (12) EUROPEAN PATENT APPLICATION

(21) Application number: **81301349.7**

(22) Date of filing: **27.03.81**

(51) Int. Cl.³: **G 01 N 27/22**

(43) Date of publication of application:
**06.10.82 Bulletin 82/40**

(84) Designated Contracting States:
**AT BE CH DE FR GB IT LI LU NL SE**

(71) Applicant: **AUBURN INTERNATIONAL, INC.
One Southside Drive
Danvers Massachusetts 01923(US)**

(72) Inventor: **Dechene, Ronald L.
School Street
Boxford Massachusetts 01921(US)**

(72) Inventor: **Newton, Robert E.
41 Susan Drive
Tewksbury Massachusetts 01876(US)**

(74) Representative: **Jones, Ian et al,
POLLAK MERCER & TENCH High Holborn House 52-54
High Holborn
London WC1V 6RY(GB)**

(54) Method of and apparatus for measuring the liquid content of a mixed-phase fluid.

(57) In a method of and an apparatus for measuring a liquid content of a mixed phase fluid in a container, an oscillating voltage is applied to the fluid and a current with conductive and capacitive components derived, the conductive component being cancelled out. The capacitive component is phase shifted (34) into phase with the oscillating input voltage. A feedback loop (32, 23, Σ) attenuates the conductive component, avoiding amplifier saturation.

FIG. 1C

FIG. 1A

FIG. 1B

FIG. 1

Croydon Printing Company Ltd.

EP 0 061 544 A1

-1-

MEASUREMENT OF THE LIQUID CONTENT OF A MIXED PHASE
FLUID

The invention relates to the measurement of the liquid content of a mixed phase fluid.

U.S. Patents 4 074 184, 4 063 153 and 4 082 994 describe arrangements for measuring respective fractions of mixed phase fluids, particularly gas and conductive liquid or solids entrained in liquids, in which are employed means particularly suited for measuring flowing fluids and which depend on conductance under an applied voltage or which use capacitance techniques for non-conductive fluids.

However, there remains a need for means for measuring the liquid content of a mixed stream of liquid and gas in situations when the liquid fraction of the stream may be very small, for example, less than 10%, a condition occurring, for instance, in some stream flows.

The present invention accordingly provides a method of measuring the liquid content of a mixed phase fluid wherein a conductive liquid contains voids therein, the method comprising making a capacitive current measurement between two spaced electrodes, and being characterised by cancelling out a conductive component of the current measurement through the fluid inherently picked up in making the capacitive measurement so that the capacitive measurement is not masked by the conductive measurement, characterised in that the measured current is produced by application of an oscillating voltage to the electrodes, and the output capacitive current component, or a voltage derivative thereof, is shifted into phase with the oscillating voltage.

The invention also provides an apparatus for measuring the liquid content of a mixed phase fluid having a conductive liquid containing voids therein, the apparatus comprising means (20,12) for applying an oscillating voltage to the mixed phase fluid, and means (14) for obtaining from the fluid a current signal having conductive and capacitive components, characterised by means for cancelling out the conductive component and shifting the capacitive component or a voltage derivative thereof into phase with the oscillating voltage.

The invention also provides an apparatus for measuring the liquid content of a mixed phase fluid having a conductive liquid containing voids therein, the apparatus comprising means (20,21) for applying an oscillating voltage to the mixed phase fluid, and means (14) for detecting a current signal having conductive and capacitive components due to the applied voltage, characterised by means for deriving a valid transfer function derivative of the conductive component, a summing junction (Σ) for summing the current signal and the transfer function derivative means (24) for converting the current output of the summing junction (Σ) to a voltage, and means (28,30; 34,36,38) for applying components thereof to separate means for indicating the conductive and capacitive components of the detected current signal.

The amount of liquid present in the mixed phase fluid is thus measured by making use of its dielectric characteristics. Two distinct advantages are obtained by employing a dielectric capacitive measurement of the amount of, liquid, for example, water, present as a means of establishing respective fractions of the water and a gas. First, the water does not have to form a conductive lattice between electrodes as is required where conductive or impedance techniques are used. Second, the dielectric constant of water is very high compared with that of most other materials.

When the direct measurement of the capacitive component of water is attempted, the rather large conductive component tends to cause amplifier overload. The present invention provides for the conductive component to be automatically cancelled out to prevent amplifier overloading.

The invention is further described below, by way of example, with reference to the accompanying drawings, in which:

Fig. 1 is a block circuit diagram of an apparatus in accordance with the invention;

Figs. 1A to 1C show voltage variations with time at certain points of the circuit of Fig. 1; and

Fig. 2 is a partial schematic illustration of a modified form of the apparatus of Fig. 1.

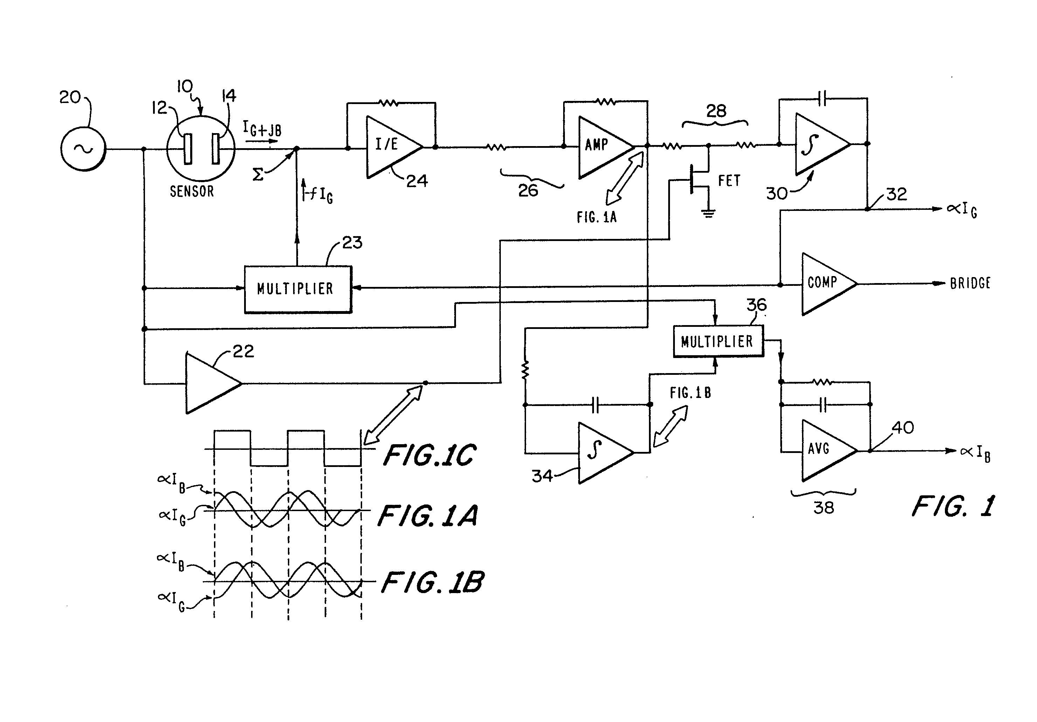

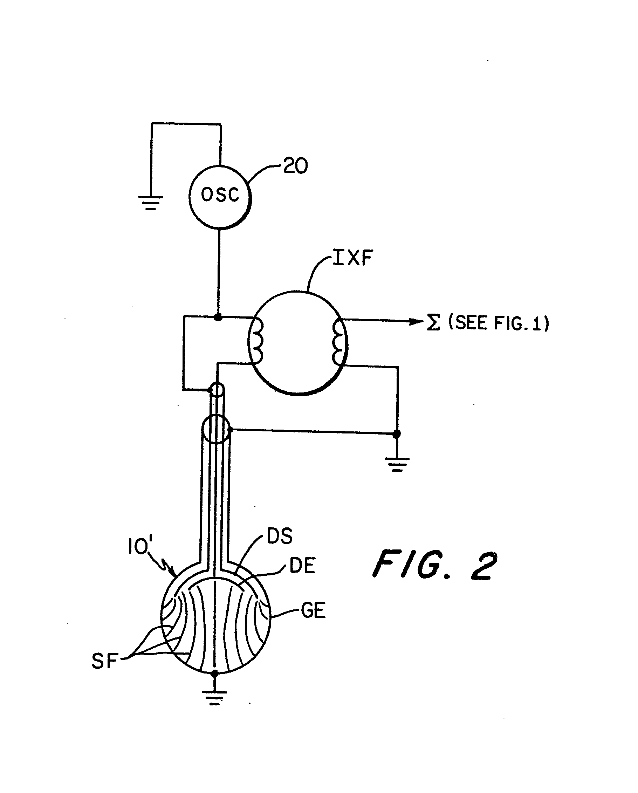

The apparatus of Fig. 1 includes a sensor 10 having two plates or electrodes 12,14 spaced part in the cross-section of a fluid container. The circuit of Fig. 1 comprises an oscillator 20 providing a sinusoidal output driving one electrode 12 of the sensor 10 so that a current $(I_G + j_B)$, due to both the conductive and capacitive components, appears at the opposed electrode 14. The sensor 10 and electrical circuit components, except as otherwise stated herein, can be essentially as described in U.S. Patents 4 974 184, 4 063 153 and 4 082 994.

The output of the oscillator 20 is also fed to a comparator 22 in order to detect the axis crossing of the sensor excitation voltage, as indicated in Fig. 1C. Also, the oscillator output is fed to one input of each of multipliers 23 and 36.

-4-

The current from the sensor electrode 14, which may have varying capacitive and conductive components, enters a summing junction Σ at the input of an amplifier 24 which translates the current to a voltage signal with some effective gain. A second voltage amplifier or gain stage indicated generally at 26 further amplifies this voltage signal. A FET (field effect transistor) switch circuit 28, driven by the comparator 22, (see Fig. 1A) commutates the amplified voltage signal in synchronism with the oscillator (20) into an integration circuit 30, rectification being also achieved. The output of the averaging circuit taken off at point 32 of the circuit is proportional to the conductive current $I_G$, the in phase component of the sensor current.

The signal from the amplifier stage 26 is also fed to an integrator circuit 34 which shifts the phase of the signal by 90° so that the capacitive (quadrature) current signal is shifted into phase with the output of the oscillator 20 (see Fig. 1B). The output of the integrator circuit 34 enters the multiplier circuit 36 which feeds an averager circuit 38. The output of the averager circuit 38 taken at point 40 is a signal proportional to the capacitive current $I_B$ (quadrature current) of the sensor 10.

The outputs at the points 32 and 40 can be applied to separate means for indicating the conductive and capacitive components respectively of the current at the electrode 14.

Since the conductive current of the sensor usually (in water) far exceeds the capacitive current, the amplifiers of the circuit would be driven into saturation unless some means of nulling the conductive current is employed. To accomplish this, the proportional conductive component output of the signal available at the point 32 is fed back to the second input of the multiplier 23. The output of the multiplier 23 is an inversion of the oscillator input to the multiplier, but varying in amplitude. The output of the multiplier 23 is a current, and as such is fed directly into the summing junction $\Sigma$ as a signal nearly nulling the conductive component of the sensor current. The averaged output at the point 32 is thus an error signal proportional to the conductive component $I_G$. The signal levels in the amplifiers are reduced to non-saturation levels. Thus, by means of the feedback network, the capacitive current component is attenuated to avoid amplifier saturation, and it is possible to measure a relatively small value of capacitance current in the presence of a rather large conductance current.

In the course of experimentation, it became evident that unless the electrodes 12,14 were bridged by water, the field would tend to locate in the gap, thus reducing the apparent capacitive output due to the presence of the water. A logical output derived from the conductive output 32 would allow an operator to provide further gain at the capacitive output 40.

In a modified apparatus embodying the invention, thé sensor input is grounded, eliminating one active electrode, as shown in Fig. 2. In the modified sensor 10' of Fig. 2, the output of the oscillator 20 is applied to a driven electrode DE and a driven shield electrode DS in circuit with a current transformer IXF which extracts a measured current from a grounded sensing electrode GE for application to the summing junction $\Sigma$. The driven shield electrode DS is extended around the driven electrode DE to focus the sensing field SF.

CLAIMS

1. A method of measuring the liquid content of a mixed phase fluid wherein a conductive liquid contains voids therein, the method comprising making a capacitive current measurement between two spaced electrodes, and being characterised by cancelling out a conductive component of the current measurement through the fluid inherently picked up in making the capacitive measurement so that the capacitive measurement is not masked by the conductive component, the measured current being produced by application of an oscillating voltage to the electrodes, and the output capacitive current component, or a voltage derivative thereof, being shifted into phase with the oscillating voltage.

2. A method as claimed in claim 1 wherein the conductive current component is amplified and saturation of the amplifying apparatus is avoided by attenuation of the component by a feedback network.

3. An apparatus for measuring the liquid content of a mixed phase fluid having a conductive liquid containing voids therein, the apparatus comprising means (20,12) for applying an oscillating voltage to the mixed phase fluid, and means (14) for obtaining from the fluid a current signal having conductive and capacitive components, characterised by means for cancelling out the conductive component and shifting the capacitive component or a voltage derivative thereof into phase with the oscillating voltage.

4. An apparatus as claimed in claim 3 including amplifier means (24,26) and a feedback network (32,23,Σ) for attenuation of the conductive component to avoid saturation of the amplifier means.

5. An apparatus for measuring the liquid content of a mixed phase fluid having a conductive liquid containing voids therein the apparatus comprising means (20,21) for applying an oscillating voltage to the mixed phase fluid, and means (14) for detecting a current signal having conductive and capacitive components due to the applied voltage, characterised by means for deriving a valid transfer function derivative of the conductive component, a summing junction (Σ) for summing the current signal and the transfer function derivative, means (24) for converting the current output of the summing junction (Σ) to a voltage, and means (28,30; 34,36,38) for applying components thereof to separate means for indicating the conductive and capacitive components of the detected current signal.

6. An apparatus as claimed in claim 5 in which the means for deriving the transfer function derivative comprise a feedback loop (32,23) in which a voltage derivative of the conductive component and the oscillating voltage are applied to a multiplier (23) which produces as a current output a negative sign transfer function of the conductive component.

7. An apparatus as claimed in claim 3, 4, 5 or 6 wherein the oscillating voltage is applied to an electrode (12) within the fluid and the current signal is detected by a second electrode (14) within the fluid spaced therefrom.

8. An apparatus as claimed in claim 3, 4, 5 or 6 wherein the current signal is extracted by a current transformer (IXF) from a grounded sensing electrode (GE).

FIG. 1

FIG. 2

### European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 778 705  (F.L.MALTBY) *See page 9; claim 1; figure 5* | 1,3,7 | G 01 N   27/22 |
| Y | SU-A- 175 733  (KLYUCHKOV) *See Derwent abstract* | 1,3,4 | |
| A | US-A-4 181 881  (F.PREIKSCHAT) *See first page* | 1 | |
| A | US-A-4 174 498  (F.PREIKSCHAT) *See first page* | 1 | |
| E | US-A-4 288 741  (R.DECHENE) *See whole document* | 1-8 | |

| | | | TECHNICAL FIELDS SEARCHED (Int. Cl. ³) |
|---|---|---|---|
| | | | G 01 N   27/22 |

The present search report has been drawn up for all claims

| Place of search THE HAGUE | Date of completion of the search 25-06-1982 | Examiner DUCHATELLIER M.A. |
|---|---|---|